# EUROPEAN PATENT APPLICATION

(11) **EP 2 336 674 A1**
(43) Date of publication of application: **22.06.2011**
(21) Application number: 09822113.8
(22) Date of filing: 23.10.2009
(51) Int. Cl.: F25B 1/00, B60H 1/32

(54) **REFRIGERATION CYCLE SYSTEM AND AUTOMOTIVE AIR CONDITIONING SYSTEM USING SAID REFRIGERATION CYCLE SYSTEM**

(30) Priority: 23.10.2008 JP 2008272955
(71) Applicant: Sanden Corporation, Isesaki-shi Gunma 372-8502 (JP)
(72) Inventor: MATSUMOTO Yuuichi, Isesaki-shi Gunma 372-8502 (JP)
(74) Representative: Prüfer & Partner GbR European Patent Attorneys
(86) International application number: PCT/JP2009/068642
(87) International publication number: WO 2010/047421

(57) **Abstract**

There are provided a refrigeration cycle system which ensures adequate lubrication in a compressor and operates at a satisfactory coefficient of performance despite use of a working fluid containing a lubricant and a refrigerant that separate from each other in a condenser, and an automotive air-conditioning system including the refrigeration cycle system. A refrigeration cycle system (12) comprises a compressor (28), a condenser (24), an expansion valve (26) and an evaporator (28) disposed in a circulation path (14) along which a working fluid containing a lubricant and a refrigerant that separates from each other at temperatures higher than a two-layer separation temperature flows, serially in a specified flow direction of the working fluid, and a lubricant return means for preventing the lubricant from accumulating in the condenser (24). The lubricant return means reduces pressure of the refrigerant in the condenser (24) to a saturation pressure of the refrigerant for the two-layer separation temperature or below, when the working fluid is made to flow along the circulation path in the specified flow direction and temperature around the condenser (24) is lower than the two-layer separation temperature.

## Description

### Technical Field

This invention relates to a refrigeration cycle system and an automotive air-conditioning system including the refrigeration cycle system.

### Background Art

A system for performing a refrigeration cycle (refrigeration cycle system) has a circulation path along which a working fluid containing a refrigerant and a lubricant is forced to circulate.

There are a variety of refrigerants and a variety of lubricants (refrigerator oils), and some combinations of a refrigerant and a lubricant show low compatibility. Patent document 1 points out that use of low-compatible refrigerant and refrigerator oil in combination may lead to accumulation of the refrigerator oil in piping, particularly in a heat pump air-conditioner designed to also perform the refrigeration cycle with the flow of the refrigerant reversed, and thus, oil deficiency in the compressor. Patent document 1 also points out that the refrigerator oil does not satisfactorily return to the compressor, particularly at low revolving speeds of the compressor.

In view of this, patent document 1 discloses control of compressor revolving speed or expansion valve position to make the refrigerant flow upward in an ascending section of piping at a velocity higher than the flow velocity that causes the oil adhering to the inner surface of the piping to ascend (zero penetration velocity).

Patent document 1: Japanese Patent Application Laid-open No. 2001-272117 Publication (Abstract, Par. Nos. 0019 to 0025, etc.)

### Disclosure of the Invention

### Problem to be Solved by the Invention

To protect the global environment, research and development of new refrigerants to substitute for R134a has been being advanced. An example of such new refrigerant is R1234yf (Tetrafluoropropene: F₃C-CF=CH₂). R1234yf has a GWP (global warming potential) of 4, far lower than R134a's GWP of 1300.

However, a combination of R1234yf and PAG (polyalkylene glycol) shows a low two-layer separation temperature, or temperature at which the refrigerant and the lubricant separates from each other, compared with the conventional combination of R134a and PAG. Thus, if R1234yf and PAG are used in combination under the conventional operating conditions, it follows that the temperature of the working fluid in the condenser is higher than the two-layer separation temperature so that the refrigerant and the lubricant separate from each other in the condenser.

Thus, when R1234yf and PAG are used in combination, the lubricant accumulates in the condenser, so that a reduced amount of the lubricant returns to the compressor, resulting in inadequate lubrication in the compressor. In addition, the lubricant accumulating in the condenser hinders heat transfer in the condenser, resulting in a decrease in COP (coefficient of performance).

It is thought that if the refrigerant is made to flow at a velocity higher than the zero penetration velocity by using the technology disclosed in patent document 1, the separated lubricant can be returned to the compressor to some extent.

PAG is however not always incompatible with R1234yf; PAG separates from R1234yf solely in the condenser. Given this, in order to prevent the lubricant from accumulating in the condenser, it is more direct and effective to prevent separation of the refrigerant and the lubricant in the condenser than to return the lubricant separated from the refrigerant.

Further, under some operating conditions of the refrigeration cycle, keeping the flow velocity of the refrigerant higher than or equal to the zero penetration velocity results in keeping the temperature of the working fluid in the condenser higher than the two-layer separation temperature. It is therefore likely to cause the separation of the lubricant in the condenser.

The present invention has been made in consideration of the above problems. An object of the present invention is to provide a refrigeration cycle system which ensures adequate lubrication in the compressor and operates at a satisfactory COP, despite the use of a working fluid containing a refrigerant and a lubricant that separate from each other in the condenser, and an automotive air-conditioning system including the refrigeration cycle system.

### Means for Solving the Problem

In order to achieve the above object, the present invention provides, as one embodiment, a refrigeration cycle system comprising a compressor, a condenser, an expansion valve and an evaporator disposed in a circulation path along which a working fluid containing a refrigerant and a lubricant that separate from each other at temperatures higher than a two-layer separation temperature flows, serially in a specified flow direction of the working fluid, and a lubricant return means for preventing the lubricant from accumulating in the condenser, wherein the lubricant return means reduces pressure of the refrigerant in the condenser to a saturation pressure of the refrigerant for said two-layer separation temperature or below, when the working fluid is made to flow along the circulation path in said specified flow direction and temperature around the condenser is lower than said two-layer separation temperature (claim 1).

Desirably, the lubricant return means includes a displacement regulation means for regulating displacement of the compressor to reduce the pressure of the refrigerant in the condenser by regulating the displacement of the compressor by using the displacement regulation means (claim 2).

Desirably, the lubricant return means further includes a flow reversing means for causing the working fluid to flow along the circulation path in a direction opposite to said specified flow direction (claim 3).

Desirably, the flow reversing means includes a four-way switch valve disposed in the circulation path and changed between a position to connect a discharge port and a suction of the compressor to an inlet of the condenser and an outlet of the evaporator, respectively, and a position to connect the discharge port and the suction of the compressor to the outlet of the evaporator and the inlet of the condenser, respectively (claim 4).

Desirably, the refrigerant and the lubricant contained in the working fluid are R1234yf and polyalkylene glycol, respectively (claim 5).

The present invention also provides, as an embodiment, an automotive air-conditioning system including a refrigeration cycle system as described above.

### Effect of the Invention

In the refrigeration cycle system according to the present invention recited in claim 1, when the temperature around the condenser is lower than the two-layer separation temperature, the lubricant return means reduces the pressure of the refrigerant in the condenser to the saturation pressure of the refrigerant for the two-layer separation temperature or below. This not only prevents the refrigerant and the lubricant from separating from each other in the condenser, but also causes the lubricant having accumulated in the condenser to mix with the refrigerant, and thus, ensures that the lubricant returns to the compressor with the refrigerant. As a result, adequate lubrication is maintained in the compressor and a decrease in COP (coefficient of performance) is prevented.

In the refrigeration cycle system recited in claim 2, the pressure of the refrigerant in the condenser is reliably reduced to the saturation pressure of the refrigerant for the two-layer separation temperature or below by regulating the displacement of the compressor.

In the refrigeration cycle system recited in claim 3, the flow reversing means can cause the working fluid at relatively low temperature to pass through the condenser, thereby causing the lubricant having accumulated in the condenser to mix with the refrigerant and return to the compressor. Thus, even when the temperature around the condenser is higher than the two-layer separation temperature, the lubricant having accumulated in the condenser is returned to the compressor, so that adequate lubrication is ensured in the compressor.

In the refrigeration cycle system recited in claim 4, the use of the four-way switch valve enables reliable return of the lubricant to the compressor with a simple structure.

The refrigeration cycle system recited in claim 5, which uses low-GWP R1234yf as a refrigerant contained in the working fluid, is global environment-friendly. The working fluid also contains polyalkylene glycol as a lubricant, which ensures adequate lubrication in the compressor.

In the automotive air-conditioning system recited in claim 6, the lubricant return means ensures that the lubricant having accumulated in the condenser is returned to the compressor, even in an environment in which the temperature of the working fluid exceeds the two-layer separation temperature in the condenser, and thus, the lubricant accumulates in the condenser. This automotive air-conditioning system is therefore useful in every region of the world.

### Brief Description of the Drawings

FIG. 1 is a diagram schematically showing a configuration of an automotive air-conditioning system according to a first embodiment,
FIG. 2 is a diagram showing a part of the automotive air-conditioning system near a four-way switch valve, inclusive of the four-way switch valve, on an enlarged scale,
FIG. 3 is a graph representing relation between two-layer separation temperature and oil circulation ratio for a combination of R1234yf and PAG and a combination of R134a and PAG,
FIG. 4 is a graph showing relation between kinematic viscosity and temperature for a combination of R1234yf and PAG, together with isothermal lines, an incompatibility region and refrigeration cycles, and
FIG. 5 is a graph representing relation between kinematic viscosity and temperature for a combination of R134a and PAG, together with isothermal lines, an incompatibility region and a refrigeration cycle.

### Explanation of the Reference Characters

- 12: Refrigeration cycle system
- 14: Circulation path
- 22: Compressor
- 24: Condenser
- 26: Expansion valve
- 28: Evaporator

### Best Mode of Carrying out the Invention

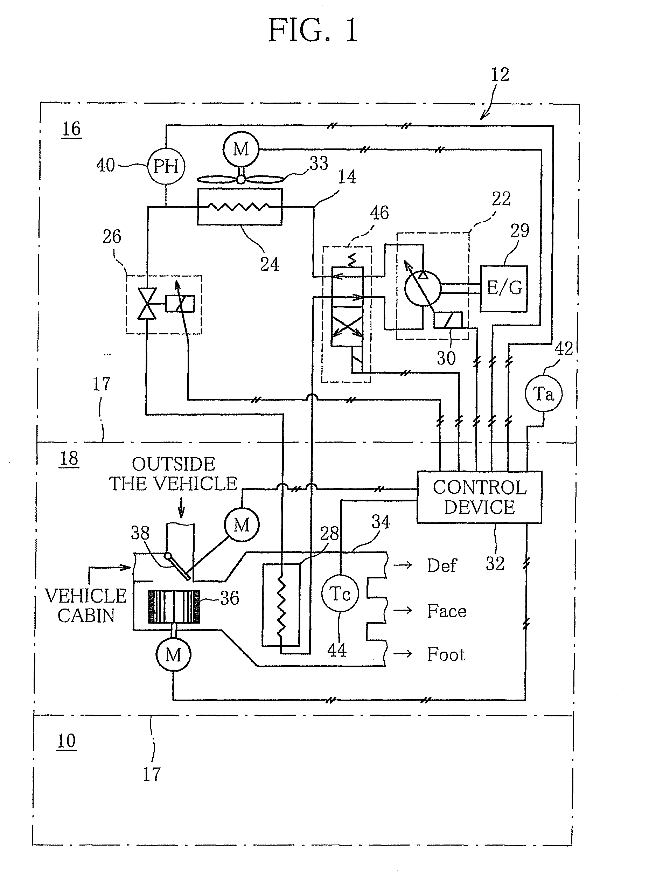

FIG. 1 schematically shows an automotive air-conditioning system according to a first embodiment. The automotive air conditioning system can cool a cabin 10 according to a temperature setting set as desired. The automotive air-conditioning system includes a refrigeration cycle system 12 for performing a refrigeration cycle. The refrigeration cycle system 12 has a circulation path 14 along which a working fluid is forced to circulate.

The working fluid contains a refrigerant and a refrigerator oil (lubricant), and the refrigerant and the refrigerator oil separate from each other at temperatures higher than a two-layer separation temperature. Preferably, the working fluid contains a refrigerant R1234yf and a lubricant PAG (polyalkylene glycol).

The circulation path 14 runs from an engine room 16 to an instrument space 18 through a partition 17. The instrument space 18 is defined by an instrument panel 20 in front of the cabin 10. A compressor 22, a condenser and an expansion valve 25 are disposed in the circulation path 14, in its section inside the engine room 16, serially in a direction in which the working fluid normally flows (normal direction). An evaporator is disposed in the circulation path 14, in its section inside the instrument space 18.

The compressor 22 is mechanically connected to an engine 29 by means of a belt and pulley system, for example, and driven by power from the engine 29. Preferably, the compressor 22 is a variable displacement compressor and includes a displacement control valve.

The displacement control valve includes a solenoid 30 electrically connected to a control device 32. The control device 32 regulates the displacement, or volume discharged by the compressor 22 per rotation, by regulating current supplied to the solenoid 30. The control device 32 may be composed of electric circuits, and for example, an ECU (electric control unit).

The displacement may be regulated, for example by Ps control, i.e., controlling the pressure at which the working fluid is sucked into the compressor 22 (suction pressure), or differential pressure control, i.e., controlling the difference (Pd-Ps differential pressure) between the pressure at which the working fluid is discharged from the compressor 22 (discharge pressure) and the suction pressure.

Near the condenser 24 is provided a condenser fan 33. The working fluid passing through the condenser 24 in the normal direction is cooled by airflow from before the vehicle, caused by the vehicle travelling, and/or airflow from the condenser fan 33.

Preferably, the expansion valve 26 is an electronic expansion valve. The control device 32 regulates the operating position of the expansion valve 26. The expansion valve 26 causes the working fluid flowing in the normal direction to expand.

The evaporator 28 is disposed inside an air-conditioning unit housing 34. Also a blower fan 36 and a heater core (not shown) are disposed inside the air-conditioning unit housing 34. An inside/outside air switch damper 38 is arranged at an inlet of the air-conditioning unit housing 34, and a vent switch damper (not shown) is arranged at an outlet of the air-conditioning unit housing 34.

The working fluid passing through the evaporator 28 in the normal direction evaporates by taking heat from air from the blower fan 36, so that the air from the blower fan 36 is cooled, or becomes cold air and flows into the cabin 10 to cool the cabin 10.

The refrigeration cycle system 12 has a plurality of sensors providing various information. One of those sensors is a pressure sensor 40 for detecting pressure of the refrigerant in the condenser 24 (high-pressure). The pressure sensor 40 may be disposed in the circulation path 14, at any location between the compressor 22 and the inlet of the expansion valve 26. Here, it is disposed immediately downstream of the condenser 24 in consideration of durability. The high-pressure detected by the pressure sensor 40 is fed to the control device 32.

The sensors provided in the refrigeration cycle system 12 also include an outside air temperature sensor 42 for detecting outside air temperature, or temperature around the condenser 24. Also the outside air temperature detected by the outside air temperature sensor 42 is fed to the control device 32. The control device 32 holds, on its database, data concerning relation between the outside air temperature and the refrigerant saturation pressure, so that the control device 32 can retrieve a refrigerant saturation pressure corresponding to an outside air temperature detected.

The sensors provided in the refrigeration cycle system 12 also include an evaporator temperature sensor 44 for detecting temperature of air cooled in the evaporator 28 (evaporator temperature). The evaporator temperature detected by the evaporator temperature sensor 44 is fed to the control device 32 and used in determining a desired value of the suction pressure or of the Pd-Ps differential pressure, for example.

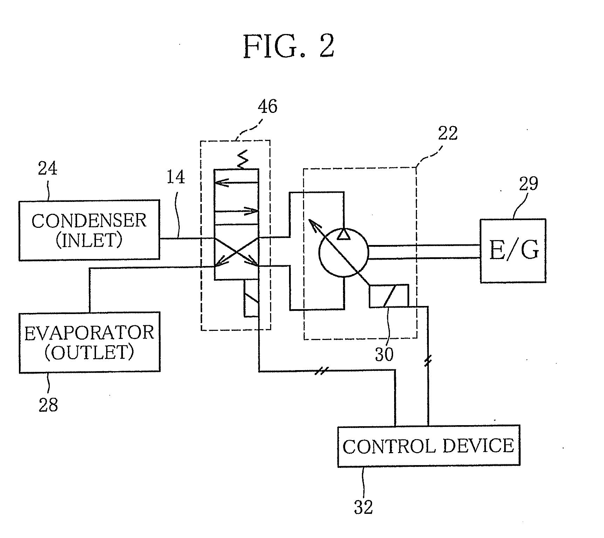

Preferably, a four-way switch valve 46 is disposed in the circulation path 14. As shown in FIG. 2 on an enlarged scale, the four-way switch valve 46 is changed between two positions to connect a discharge port and a suction port of the compressor 22 to an inlet of the condenser 24 and an outlet of the evaporator 28 in two alternative ways.

Specifically, in a normal position, the four-way switch valve 46 connects the discharge port and the suction port of the compressor 22 to the inlet of the condenser 24 and the outlet of the evaporator 28, respectively. In a reverse position shown in FIG. 2, the four-way switch valve 46 connects the discharge port and the suction port of the compressor 22 to the outlet of the evaporator 28 and the inlet of the condenser 24, respectively.

The control device 32 controls the four-way switch valve 46 to take the normal position or the reverse position. Next, how to use the above-described automotive air-conditioning system, or in other words, control performed by the control device 32 will be explained.

The control device 32 can perform control in a mode selected from a normal operation mode and a first lubricant return mode and possibly also a second lubricant return mode, depending on the varying situation. The second lubricant return mode is provided as necessary.

In the normal operation mode, the control device 32 makes the automotive air-conditioning system operate so that the temperature in the cabin 10 will approach a temperature setting set by a passenger in the vehicle, for example. In this case, the displacement of the compressor 22 and the operating position of the expansion valve 26 are controlled so that the temperature of the air after passing across the evaporator 28 will approach a desired value.

In the first and second lubricant return modes, the control device 32 makes the automotive air-conditioning system operate so that accumulation of the lubricant in the condenser 24 will be prevented. Here, the accumulation of the lubricant in the condenser 24 not only means that the lubricant accumulates in the condenser 24 but also that the lubricant adheres to the inner surface of the condenser 24 to some extent.

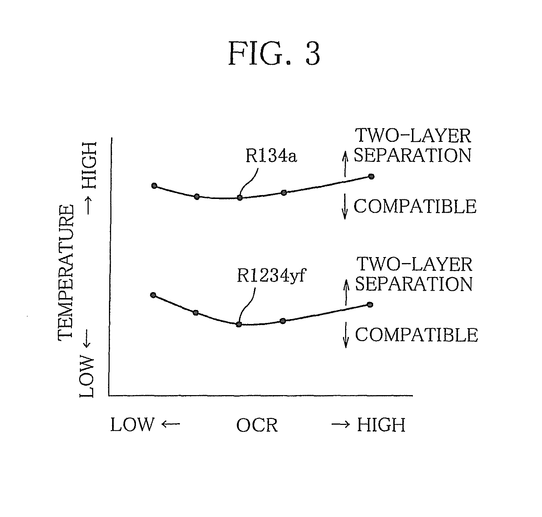

The first and second lubricant return modes are provided in consideration of the fact that R1234yf and PAG experience two-layer separation at low temperature compared with, for example R134a and PAG, as shown in FIG. 3. In FIG. 3, the horizontal axis indicates the ratio of the lubricant to the circulating working fluid.

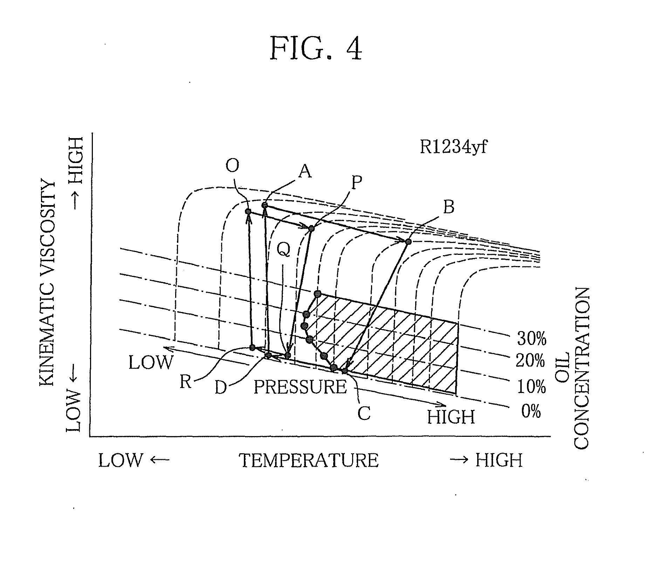

FIG. 4 shows a kinematic viscosity versus temperature chart, where how the kinematic viscosity of the working fluid containing a refrigerant R1234yf and a lubricant PAG at different lubricant concentrations 0, 10, 20 and 30 % varies with temperature is plotted (chain lines). In FIG. 4, also isobaric lines are plotted (broken lines), the refrigeration cycle in the normal operation mode is indicated by A(compressor inlet port)-B(compressor outlet port)-C(expansion valve inlet)-D(expansion valve outlet) line, the refrigeration cycle in the first lubricant return mode is indicated by O(compressor inlet port)-P(compressor outlet port)-Q(expansion valve inlet)-R(expansion valve outlet) line, and a region in which R1234yf and PAG experience two-layer separation (incompatibility region) is indicated by hatching.

FIG. 4 shows that the refrigeration cycle in the normal operation mode A-B-C-D, specifically process B-C traverses the incompatibility region, which means the lubricant separates from the refrigerant in the condenser 24.

By contrast, the refrigeration cycle in the first lubricant return mode O-P-Q-R does not traverse the incompatibility region. This is because the first lubricant return mode is provided to return the lubricant having accumulated in the condenser 24 to the compressor 22, when the two-layer separation temperature for the refrigerant and lubricant is lower than the temperature around the condenser 24 (outside air temperature).

To achieve this, in the first lubricant return mode, the automotive air-conditioning system is made to operate to reduce the pressure of the refrigerant in the condenser 24 to a saturation pressure of the refrigerant for the outside temperature or below. Preferably, the control device 32 reduces the pressure of the refrigerant in the condenser 24 to the saturation pressure of the refrigerant for the outside temperature or below by reducing the displacement of the compressor 22.

The control in the first lubrication return mode causes the lubricant having accumulated in the condenser 24 to mix with the refrigerant, and thus, return to the compressor 22 by flowing with the refrigerant along the circulation path 14 in the normal direction.

The pressure of the refrigerant in the condenser 24 (high-pressure) may be reduced to the saturation pressure of the refrigerant for the outside temperature or below by taking one or more measures selected from increase of airflow from the condenser fan 33, reduction of airflow from the blower fan 36 and change of the inside/outside air switch damper 38 into an inside air circulation position, in addition to reducing the displacement.

The second lubricant return mode is provided to return the lubricant having accumulated in the condenser 24 to the compressor 22, when the two-layer separation temperature for the refrigerant and lubricant is higher than or equal to the temperature around the condenser 24 (outside air temperature). The second lubricant return mode is therefore not necessarily required in cold weather regions.

To achieve this, in the second lubricant return mode, the control device 32 changes the four-way switch valve 46 from the normal position to the reverse position. As a result, the refrigerant discharged from the compressor 22 flows along the circulation path 14 in the reverse direction, namely flows through the evaporator 28, the expansion valve 26 and the condenser 24 serially, and is sucked into the compressor 22.

In the second lubricant return mode, the working fluid at low temperature passing through the condenser 24 mixes with the lubricant having accumulated in the condenser 24, and returns to the compressor 22.

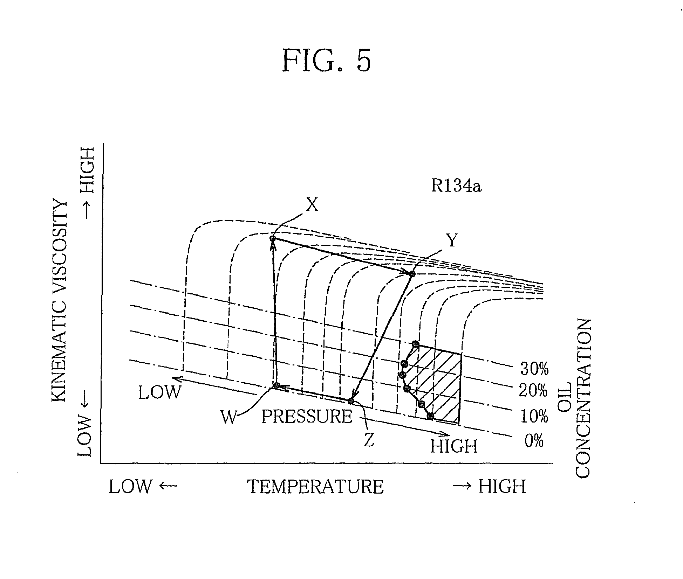

FIG. 5 is a kinematic viscosity versus temperature chart for an comparative example, where how the kinematic viscosity of the working fluid containing a refrigerant R134a and a lubricant PAG at different lubricant concentrations 0, 10, 20 and 30 % varies with temperature is plotted (chain lines) with isobaric lines (broken line), the refrigeration cycle in the normal operation mode is indicated by X(compressor inlet port)-Y(compressor outlet port)-V(expansion valve inlet)-W(expansion valve outlet) line, and an incompatibility region for R134a and PAG is indicated (by hatching).

FIG. 5 shows that the refrigeration cycle X-Y-V-W does not traverses the incompatibility region, which means the R134a and PAG does not experience two-layer separation. If the refrigeration cycle in the normal operation mode does not traverses the incompatibility region like this, the first and second lubrication return modes are not required.

In the above-described embodiment of the refrigeration cycle system 12 applied to the automotive air-conditioning system, control in the normal operation mode allows the cabin 10 to be cooled or dehumidified according to a passenger's instruction.

In the normal operation mode, the refrigeration cycle A-B-C-D traverses the two-layer separation region, and thus, the lubricant adheres to the inner surface of the condenser 24 and of a section of the piping near the condenser 24, and thus, accumulates.

When the lubricant accumulates in the condenser 24 to a certain extent, the control device 32 performs control in the first or second lubricant return mode to return the lubricant having accumulated to the compressor 22 to the compressor 22.

Specifically, when the temperature around the condenser 24 is lower than the two-layer separation temperature, control in the first lubricant return mode is performed to reduce the pressure of the refrigerant in the condenser 24 to the saturation pressure of the refrigerant for the two-layer separation temperature or below. This allows the lubricant having accumulated in the condenser 24 to mix with the refrigerant and return to the compressor 22 with the refrigerant, and thus, keeps adequate lubrication in the compressor 22 and prevents reduction in COP.

In the described refrigeration cycle circuit 12, the pressure of the refrigerant in the condenser 24 is reliably reduced to the saturation pressure of the refrigerant for the two-layer separation temperature or below by regulating the displacement of the compressor 22.

In the described refrigeration cycle circuit 12, when the temperature around the condenser 24 is higher than or equal to the two-layer separation temperature, control in the second lubricant return mode is performed to return the lubricant having accumulated in the condenser 24 to the compressor 22 to ensure adequate lubrication in the compressor 22.

In the described refrigeration cycle circuit 12, the use of the four-way switch valve 46 enables reliable return of the lubricant to the compressor 22 with a simple structure.

Further, the described refrigerant cycle circuit 12, which uses a working fluid containing low-GWP R1234yf as a refrigerant, is global environment-friendly. The working fluid also contains polyalkylene glycol as a lubricant, which ensures adequate lubrication in the compressor 22.

In the above-described automotive air-conditioning system, the temperature of the refrigerant in the condenser 22 is kept lower than or equal to the two-layer separation temperature, even in an environment in which the control in the normal operation mode results in its exceeding the two-layer separation temperature. This automotive air-conditioning system is therefore useful in every region of the world.

The present invention is not restricted to the above-described embodiment but can be modified in various ways.

For example, in the described embodiment, the working fluid contains a refrigerant R1234yf and a lubricant PAG. The refrigerant and the lubricant are however not restricted to these. The refrigeration cycle according to the present invention is applicable to working fluids experiencing separation of a refrigerant and a lubricant in the condenser 24.

In the described embodiment, the control device 32 performs control in the first or second lubricant return mode when the lubricant has accumulated in the condenser 24 to a certain extent. The control device may however perform control in the first or second lubricant return mode, on a regular or irregular basis.

Alternatively, it may be arranged such that the control device performs control in the first or second lubricant return mode after a long period of low-flow rate circulation of the working fluid, as observed in long engine idling in the vehicle, for example.

Further, it may be arranged such that the control device performs control in the first or second lubricant return mode when the heat-transfer effectiveness in the condenser 24 has reduced to a certain level or when the amount of the lubricant inside the compressor 22 has reduced to a certain level.

In the described embodiment, a four-way switch valve 46 is provided as a means for making the working fluid flow along the circulation path 14 in the reverse direction. The reversing means may however be a plurality of solenoid valves, for example.

In the described embodiment, the expansion valve 26 may be a temperature-sensitive expansion valve or the like if control in the second lubricant return mode is not required.

In the described embodiment, the compressor 22 may be any type of compressor; it may be a swash-plate or wobble-plate reciprocating compressor, a scroll compressor or a vane compressor, for example.

Last, it goes without saying that the refrigeration cycle system according to the present invention is applicable to refrigerator-freezers, room air-conditioners, etc.

### Industrial Applicability

The present invention is applicable to a refrigeration cycle system using a working fluid containing a lubricant and a refrigeration that separate from each other in a condenser and an automotive air-conditioning system including such refrigeration cycle system, in order to ensure adequate lubrication in the compressor and satisfactory COP.

## Claims

1. A refrigeration cycle system comprising a compressor, a condenser, an expansion valve and an evaporator disposed in a circulation path along which a working fluid containing a refrigerant and a lubricant that separate from each other at temperatures higher than a two-layer separation temperature flows, serially in a specified flow direction of the working fluid, and a lubricant return means for preventing the lubricant from accumulating in the condenser, wherein
the lubricant return means reduces pressure of the refrigerant in the condenser to a saturation pressure of the refrigerant for said two-layer separation temperature or below, when the working fluid is made to flow along the circulation path in said specified flow direction and temperature around the condenser is lower than said two-layer separation temperature.

2. The refrigeration cycle system according to claim 1, wherein the lubricant return means includes a displacement regulation means for regulating displacement of the compressor to reduce the pressure of the refrigerant by regulating the displacement of the compressor by using the displacement regulation means.

3. The refrigeration cycle system according to claim 1 or 2, wherein the lubricant return means further includes a flow reversing means for causing the working fluid to flow along the circulation path in a direction opposite to said specified flow direction.

4. The refrigeration cycle system according to claim 3, wherein the flow reversing means includes a four-way switch valve disposed in the circulation path and changed between a position to connect a discharge port and a suction of the compressor to an inlet of the condenser and an outlet of the evaporator, respectively, and a position to connect the, discharge port and the suction of the compressor to the outlet of the evaporator and the inlet of the condenser, respectively.

5. The refrigeration cycle system according to any one of claims 1 to 4, wherein the working fluid contains polyalkylene glycol as the lubricant and R1234yf as the refrigerant.

6. An automotive air-conditioning system including a refrigeration cycle system according to any of claims 1 to 5.
